(19) **Europäisches Patentamt**
**European Patent Office**
**Office européen des brevets**

(11) **EP 2 031 778 A1**

(12) **EUROPEAN PATENT APPLICATION**

(43) Date of publication:
**04.03.2009 Bulletin 2009/10**

(51) Int Cl.:
**H04B 17/00** (2006.01)   **H04B 1/713** (2006.01)

(21) Application number: **07017002.2**

(22) Date of filing: **30.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventor: **Kollár, Martin**
**040 11 Kosice (SK)**

(74) Representative: **Weidel, Gottfried**
**Nokia Siemens Networks GmbH & Co. KG**
**Patentabteilung**
**Postfach 80 17 60**
**81617 München (DE)**

(54) **Method of and device for equipment performance determination**

(57)    It is described a method of calculating a communication equipment performance level, wherein the method comprises determining a plurality of averaged communication equipment performance levels each corresponding to a different communication time period, for each communication time period acquiring a frequentness distribution of communication equipments used in the respective time period, calculating a respective communication equipment performance level for each of the used communication equipment based on the plurality of averaged communication equipment performance levels and on the determined frequentness distributions.

EP 2 031 778 A1

**Description**

Field of invention

The present invention relates to the field of methods of and devices for equipment performance determination, a program element and a computer readable medium. In particular, the present invention relates to equipment performance determination in the downlink path of systems using baseband frequency hopping.

Art Background

In a frequency hopping (FH) communication system, data is transmitted on different frequency subbands or carriers in different time intervals, which are also referred to as "hop periods". Current implementations of FH are based on Random or Cyclic Hopping patterns. The cyclic frequency hopping is performed constantly along a specific short hopping sequence. With random FH, the data transmission hops from subband to subband in a long pseudo-random manner. This hopping provides frequency diversity and allows the data transmission to better withstand deleterious path effects such as narrow-band interference, jamming, fading, and so on.

The evaluation of a GSM network is addressed towards a higher quality service and an increase of system capacity. The GSM system includes special features to achieve these goals. One of these features is the slow frequency hopping which consists in changing the frequency of the channel in every TDMA burst (Time Division Multiple Access burst) (217 hopes per second).

In relation to practical realization the frequency hopping can be classified in two categories: baseband hopping and synthesiser hopping. Synthesiser hopping uses only one transmitter (equipment) for all bursts belonging to a specific connection and the baseband hopping uses as many transmitter as frequencies in the hopping sequence.

In order to improve the communication in a frequency hopping scenario it would also be useful to obtain quality or performance levels of the received signal and/or equipment for each of the used subbands and transmission paths, respectively. Since the mobile station (MS) in the GSM network reports the measured RXLEV_DL (downlink received signal level) values with a fixed period of 480 ms which corresponds to a SACCH frame (Slow Associated Control Channel frame) or 104 TDMA bursts, no mapping is possible on TDMA bursts for downlink (DL) measurements. Due to the averaging affect this means that failures in the RF-TX (RF Transmitter) signal path which are located in carrier specific parts may not be reliably detected in case baseband frequency hopping is applied. In fact the MS will report an RXLEV_DL value or downlink channel performance value which is the average of levels received from different RF-TX equipments and so from different paths. Thus, no RXLEV_DL per RF-TX equipment for different RF-TX equipment is provided.

There may be a need for a method and a system, a program element, and a computer readable medium providing an improved equipment and/or channel performance determination or RXLEV value.

Summary of the Invention

This need may be met by the subject matter according to the independent claims. Advantageous embodiments of the present invention are described by the dependent claims.

According to an exemplary aspect of the invention there is provided a method of calculating a communication equipment performance level for a communication system using different communication equipments, wherein the method comprises determining a plurality of averaged communication equipment performance levels each corresponding to a different communication time period, for each communication time period acquiring a frequentness distribution of communication equipments used in the respective time period, and calculating a respective communication equipment performance level for each of the used communication equipment based on the plurality of averaged communication equipment performance levels and on the determined frequentness distributions.

According to an exemplary aspect of the invention device for calculating a communication equipment performance level in a communication using different communication equipments is provided, wherein the device comprises a determining unit adapted for determining a plurality of averaged communication equipment performance levels each corresponding to a different communication time period, an acquiring unit adapted for acquiring for each communication time period a frequentness distribution of communication equipments used in the respective time period, and a calculation unit adapted for calculating a respective communication equipment performance level for each of the used communication equipment based on the plurality of averaged communication equipment performance levels and on the determined frequentness distributions. Each of the different units may be formed by one or several processing units or processors, for example. In particular, it is also possible that all units are formed by a single and/or common processor.

According to an exemplary aspect of the invention a program element is provided, which, when being executed by a processor, is adapted to control or carry out a method according to an exemplary aspect of the invention.

According to an exemplary aspect of the invention a computer-readable medium, in which a computer program is stored which, when being executed by a processor, is adapted to control or carry out a method according to an exemplary aspect of the invention.

In this application the term "frequentness distribution" may particularly denote a distribution showing how often a specific equipment, element, entity, subband, or channel is used. For example, the frequentness distribution of used communication equipment or subbands may describe the number of times a specific equipment or subband is used in a predetermined time period. Thus, a frequentness distribution may describe the fact that a first equipment is used ten times, a second equipment is used three times, while a third equipment is used five time, etc. during a given time period, e.g. one frame or several frames.

In this application the term "communication equipment performance level" may particularly denote the quality or performance of a communication equipment during communication. For example, the term may relate to the signal level of signals transmitted through the respective communication equipment or through a plurality of given communication equipments. In particular, an averaged communication equipment performance level may relate to an averaged performance of communication equipments, e.g. averaged over a plurality of communication equipments in a given period of time. The estimation may be calculated, measured or estimated, for example and may be based on measured or otherwise determined signal levels. In particular, the signal levels may relate to received signal levels which may be associated with downlink connections as well as with uplink connections. Specifically, analyzed received signal levels may relate to downlink signal levels (RXLEV_DL), which may be associated with specific communication equipments.

A gist of the exemplary may be seen in the use of averaged communication equipment performance levels for different time periods, which may for example be calculated or measured for communications using frequency hopping, and of acquired frequentness distribution for the respective time period to calculate the individual equipment performance level. In particular, the number of used averaged communication equipment performance levels and thus used time periods may be at least the number of communication equipments used in the transmitting of communication signals. In particular, the provided method may also be suitable to determine channel or subband performance levels, i.e. may be suitable to analyse the qualities of the channels or subbands used in a frequency hopping system or communication, since each subband may be correlated or may be formed by a specific equipment. Summarizing, it may be possible to do determine the received signal level per RF-TX equipment, which may enable the detection of failures in the RF-TX signal path which are located in carrier specific parts.

Next, further exemplary embodiments of the method of equipment performance determination are described. However, these embodiments also apply to the device for equipment performance determination, the program element, and the computer readable medium.

According to another exemplary of the method the time period corresponds to a SACCH frame. Such a SACCH frame or Slow Associated Control Channel frame may consist of a number of 104 TDMA burst for example and may be a suitable time period to average equipment performance levels of a given number of communication equipment.

According to another exemplary embodiment of the method the time period corresponds to a plurality of SACCH frames. In particular, the time period may correspond to 10 SACCH frames.

The use of a time period corresponding to a plurality of SACCH frames may in particular efficient in some cases in which communication cells may occur in which a small change of MS position in relatively short time frame may lead to a big change of the communication equipment performance level value and therefore the communication equipment performance level may not assumable as a constant value in the calculation.

According to another exemplary of the method the calculation of the respective communication equipment performance levels is performed by solving a system of linear equations. In particular, each linear equation may relate to a specific time period. For example, each linear equation may be formed by the frequentness distribution of used communication equipments and the respective average communication equipment performance levels.

Thus, it may be possible to create a system of linear equations comprising N equations to calculate the performance levels or quality levels for N communication equipments. The respective equations may be formed by the averaged communication equipment performance levels, e.g. relating to the received signal level value in the downlink case (RXLEV_DL) which is equated to the linear combination of the frequentness each single communication equipment is used in the given time period multiplied by the performance levels of the single communication equipment to be calculated. In case the N equations are linearly independent from each other the linear system of equations is solvable and the performance level of each single communication equipment can be calculated. In case two of the N equations may be linearly dependent a new equation may be created by taking into account the results of a next time period.

According to another exemplary embodiment of the method a number of used hopping frequencies is less than 65. In particular, the number may be less than 17 and more particularly the number may be less than 9, e.g. 8. The number of used hopping frequencies may be correlated with the number of used equipments, i.e. each equipment may use a specific and/or different frequency, so that the numbers of used frequencies and used equipment may be identical.

In particular, 8 may be a suitable number of used hopping frequencies in case of a communication or connection using frequency hopping, since it may be that the use of more than 8 hopping frequency may not provide a significant improvement, e.g. with respect to decrease of interference between signals transmitted on different communication channels or subbands.

In particular, data processing, signal processing, or calculation which may be performed according to embodiments of the invention can be realized by a computer program, i.e. by software, or by using one or more special electronic optimization circuits, that is in hardware, or in hybrid form, that is by software components and hardware components.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

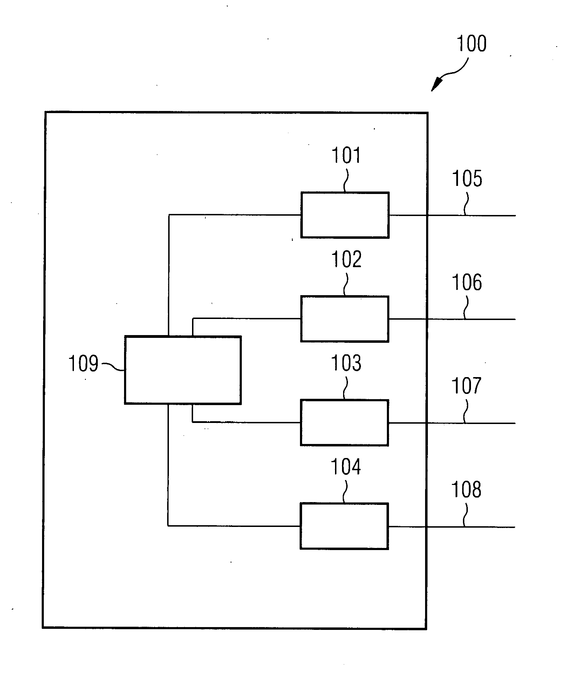

Figure 1 shows a schematically illustration of a communication system

Detailed Description

The illustration in the drawing is schematically.

Fig. 1 shows a schematically illustration of a communication system 100 which may use a method according to an exemplary embodiment. The communication system 100 comprises a plurality of equipments of which four are schematically depicted in Fig. 1 as 101, 102, 103, and 104. Each of the equipments is associated with a specific communication channel or subband and thus to a specific hopping frequency. The respective subbands are schematically depicted in Fig. 1 as lines 105, 106, 107, and 108. Measurement reports relating to the receive signal level (RXLEV) of each of the equipments are received and an averaged received signal level for the downlink (*avergRXLEV_DL*) path is retrieved. Furthermore, a frequentness distribution indicating how many TDMA bursts of a SACCH period are transmitted via each of the used equipments is determined.

This *avergRXLEV_DL* and the frequentness distribution are then sent to a processing unit or processor 109. The *avergRXLEV_DL* and the frequentness distribution may as well be determined in a determination and/or acquiring unit part of the processor. The processing unit 109 is as well adapted to calculate a respective communication equipment *RXLEV_DL* for each of the used communication equipments based on the plurality of *avergRXLEV_DL* and on the determined frequentness distributions.

In the following the calculation will be explained in more detail.

Baseband frequency hopping may be used in combination with narrowband radio frequency (RF) equipment, and multiplexes the user signal between the frequency selective synthesizers from timeslot to timeslot or from TDMA burst to TDMA burst (Time Division Multiple Access burst), respectively. Thus, the signal is transmitted via different RF-TX/RX paths.

In the following it is considered that during downlink (DL) transmission the baseband frequency hopping was applied in such a way that the maximum number of used RF-TX equipments, communication channels, or subbands was N, which also represents the maximum number of hopping frequencies. The averaged channel performance level or downlink received signal level *(RXLEV DL)* reported by a mobile station (MS) at the end of the Slow Associated Control Channel period or frame (SACCH period) is given by the following equation (1):

$$
avergRXLEV\_DL_1 = \frac{1}{100}\left( \sum_{i=1}^{K_1} RXLEV\_DL_{1,i} + \sum_{i=1}^{K_2} RXLEV\_DL_{2,i} + ... + \sum_{i=1}^{K_n} RXLEV\_DL_{n,i} \right)
$$

wherein $K_n$ for n = 1, 2, ..., N represents how many TDMA bursts were transmitted via the n-th RF-TX equipment. One SACCH frame contains 104 TDMA bursts. However, four of these N bursts are idle ones therefore the condition

$\sum_{n=1}^{N} K_n = 100$ holds. The $RXLEV\_DL_{n,i}$ represents an averaged received signal level measured by MS during the i-th TDMA burst related to the n-th RF-TX equipment.

Considering that $\dfrac{1}{K_n} \sum_{i=1}^{K_n} RXLEV\_DL_{n,i}$ represents the averaged received signal level ($RXLEV\_DL_n$)

for the n-th RF-TX equipment per SACCH period, the equation (1) can be modified into the following equation (2):

$$avergRXLEV\_DL_1 = \frac{1}{100}\left(K_1 \cdot RXLEV\_DL_1 + K_2 \cdot RXLEV\_DL_2 + ... + K_N \cdot RXLEV\_DL_N\right)$$

Similarly, for the averaged $RXLEV\_DL$ reported by MS at the end of the next SACCH period it can be written (3):

$$avergRXLEV\_DL_2 = \frac{1}{100}\left(G_1 \cdot RXLEV\_DL_1 + G_2 \cdot RXLEV\_DL_2 + ... + G_N \cdot RXLEV\_DL_N\right)$$

wherein $G_n$ for n = 1, 2, ..., N represents how many TDMA bursts were transmitted via the n-th RF-TX equipment during this next SACCH period.
At the end of the N-th SACCH period the following RXLEV_DL is reported by the MS (4):

$$avergRXLEV\_DL_N = \frac{1}{100}\left(L_1 \cdot RXLEV\_DL_1 + L_2 \cdot RXLEV\_DL_2 + ... + L_N \cdot RXLEV\_DL_N\right)$$

wherein $L_n$ for n = 1, 2, ..., N represents how many TDMA bursts were transmitted via the n-th RF-TX equipment during the N-th SACCH period.
During baseband frequency hopping up to 64 pseudo randomly chosen hopping patterns can be used. This causes that various numbers of TDMA bursts are transmitted via RF-TX equipment in different SACCH periods. To emphasize this fact different letters K, G, and L are used in the above equations.
In general the use of more than 8 hopping frequencies or RF-TX equipments does not provide a significant improvement. In case 8 hopping frequencies are used, the $avergRXLEV\_DL_n$ per SACCH period will be retrieved from 8 measurements reports which leads to a necessary time period of 8·0.480*s*. Because of this relatively short time, even any RFLOOP measurements using the RXLEV values propose a granularity period equal to 30 minutes, the $RXLEV\_DL_n$ can be assumed as a constant in the above equations. The $avergRXLEV\_DL_i$ and $K_n$, $G_n$, ..., and $L_n$ are known and stored. Therefore, the above mentioned equations define a system of N linear equations with N unknown $RXLEV\_DL_n$.
Such a system of linear equations can be written in matrix form, which in the above mentioned case would lead to the following matrix (5):

$$\begin{pmatrix} K_1 & K_2 & ... & K_N \\ G_1 & G_2 & ... & G_N \\ & & \vdots & \\ L_1 & L_2 & ... & L_N \end{pmatrix} \cdot \begin{pmatrix} RXLEV\_DL_1 \\ RXLEV\_DL_2 \\ \vdots \\ RXLEV\_DL_N \end{pmatrix} = 100 * \begin{pmatrix} avergRXLEV\_DL_1 \\ avergRXLEV\_DL_2 \\ \vdots \\ avergRXLEV\_DL_N \end{pmatrix}$$

This system of linear equations has a unique solution if the matrix (6)

$$A = \begin{pmatrix} K_1 & K_2 & ... & K_N \\ G_1 & G_2 & ... & G_N \\ & & \vdots & \\ L_1 & L_2 & ... & L_N \end{pmatrix}$$

is non-singular. In particular, as shown by Cramer's rule, there is a unique solution if A has an inverse $A^{-1}$. Simply said, the $RXLEV\_DL_n$ for different RF-TX equipments can be determined by solving the system of linear equations if any two rows in the matrix A are not multiples of each other. According to an exemplary embodiment, if there are for example two rows which are multiples of each other, one of them will be excluded and replaced by another one related to another, e.g. the next, measurement, i.e. relates to another SACCH period or frame, which satisfy the previous rule. This excluding and replacing may be performed as long as necessary, i.e. as long as any two rows are multiples of each other or linear depended. This means that more than N measurement reports, i.e. measurement reports of more than the first N SACCH periods may be necessary for the calculation. However, the number should not significantly increase. Furthermore, as already mentioned, N preferably equal 8 so that even in case the necessary SACCH periods is doubled, for example, the used SACCH periods still represent a time period which is much smaller than a proposed granularity period of 30 minutes, for example.

In some cases cells may occur where a small change of MS position in relatively short time frame may lead to a big change of $RXLEV\_DL$ value and therefore the $RXLEV\_DL_n$ may not assumable as a constant value in the matrix (5). However, also in this case it is possible to provide $RXLEV\_DL_n$ but some modifications may be necessary. The modifications may consist in increasing the length of the time period. It means that equation (2) will not represent the $avergRXLEV\_DL$ retrieved from one but for example from 10 SACCH periods as follows (7):

$$avergRXLEV\_DL_1^* = \frac{1}{1000}\left(K_1^* \cdot RXLEV\_DL_1^* + K_2^* \cdot RXLEV\_DL_2^* + ... + K_N^* \cdot RXLEV\_DL_N^*\right)$$

wherein $K_n^*$ for n = 1, 2, ..., N represents how many TDMA bursts were transmitted via the n-th RF-TX equipment during the first 10 SACCH periods.

The equation (3) will represent the $avergRXLEV\_DL$ retrieved from the first 9 SACCH periods used in equation (7) and 11-th SACCH period as follows (8):

$$avergRXLEV\_DL_2^* = \frac{1}{1000}\left(G_1^* \cdot RXLEV\_DL_1^* + G_2^* \cdot RXLEV\_DL_2^* + ... + G_N^* \cdot RXLEV\_DL_N^*\right)$$

wherein $G_n^*$ for n = 1, 2, ..., N represents how many TDMA bursts were transmitted via the n-th RF-TX equipment during the first 9 and 11-th SACCH period.

The equation (4) will represent the $avergRXLEV\_DL$ retrieved from the first 9 SACCH periods used in equation (7) and (9+N) th SACCH period as follows (9):

$$avergRXLEV\_DL_N^* = \frac{1}{1000}\left(L_1^* \cdot RXLEV\_DL_1^* + L_2^* \cdot RXLEV\_DL_2^* + ... + L_N^* \cdot RXLEV\_DL_N^*\right)$$

wherein $L_n^*$ for n = 1, 2, ..., N represents how many TDMA bursts were transmitted via the n-th RF-TX equipment during the first 9 and (9+N)-th SACCH period. But also other combinations are possible meaning that for example a sliding window will be used. It means that the equation (3) will represent *avergRXLEV_DL* retrieved from 2-nd to 11-th SACCH period and the equation (4) will represent the *avergRXLEV_DL* retrieved from the N-th to the (N+9)-th SACCH period.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

List of reference signs:

| | |
|---|---|
| 100 | Communication system |
| 101 | Communication equipment |
| 102 | Communication equipment |
| 103 | Communication equipment |
| 104 | Communication equipment |
| 105 | Subband |
| 106 | Subband |
| 107 | Subband |
| 108 | Subband |
| 109 | Processor |

**Claims**

1. A method of calculating a communication equipment performance level of a communication using different communication equipments (101, 102, 103, 104), the method comprising:

   • determining a plurality of averaged communication equipment performance levels each corresponding to a different communication time period,
   • for each communication time period acquiring a frequentness distribution of communication equipments (101, 102, 103, 104) used in the respective time period, and
   • calculating a respective communication equipment performance level for each of the used communication equipments (101, 102, 103, 104) based on the plurality of averaged communication equipment performance levels and on the determined frequentness distributions.

2. The method according to claim 1,
   wherein the time period corresponds to a SACCH frame.

3. The method according to claim 1,
   wherein the time period corresponds to a plurality of SACCH frames.

4. The method according to claim 1,
   wherein the calculation of the respective communication equipment performance level is performed by solving a system of linear equations.

5. The method according to claim 4,
   wherein each linear equation relates to a specific time period.

6. The method according to claim 5,
   wherein each linear equation is formed by the frequentness distribution of used communication equipments (101, 102, 103, 104) and the respective average communication equipment performance level.

7. The method according to claim 1,
   wherein a number of used hopping frequencies is less than 65.

8. The method according to claim 6,
   wherein the number is less than 9.

9. A device for calculating a communication equipment performance level of a communication system (100) using different communication equipments (101, 102, 103, 104), the device comprising:

 • a determining unit (109) adapted for determining a plurality of average communication equipment performance levels each corresponding to a different communication time period,
 • an acquiring unit (109) adapted for acquiring for each communication time period a frequentness distribution of communication equipments (101, 102, 103, 104) used in the respective time period, and
 • a calculation unit (109) adapted for calculating a respective communication equipment performance level for each of the used communication equipments (101, 102, 103, 104) based on the plurality of average communication equipment performance levels and on the determined frequentness distributions.

10. A program element, which, when being executed by a processor, is adapted to control or carry out a method according to claim 1.

11. A computer-readable medium, in which a computer program is stored which, when being executed by a processor, is adapted to control or carry out a method according to claim 1.

**European Patent Office**

## EUROPEAN SEARCH REPORT

Application Number

EP 07 01 7002

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 198 50 654 C1 (SIEMENS AG [DE]) 25 May 2000 (2000-05-25) * abstract * * column 5, line 22 - column 6, line 60 * * claims 1,6 * * figures 4,5 * ----- | 1-11 | INV. H04B17/00 H04B1/713 |
| A | US 5 722 059 A (CAMPANA JR THOMAS J [US]) 24 February 1998 (1998-02-24) * abstract * * column 8, line 52 - column 10, line 47 * * claim 1 * ----- | 1-11 | |

TECHNICAL FIELDS SEARCHED (IPC)

H04B

The present search report has been drawn up for all claims

| Place of search | Date of completion of the search | Examiner |
|---|---|---|
| Munich | 3 April 2008 | Helms, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 7002

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2008

| Patent document cited in search report | | Publication date | Patent family member(s) | | Publication date |
|---|---|---|---|---|---|
| DE 19850654 | C1 | 25-05-2000 | JP<br>US | 2000165332 A<br>6697616 B1 | 16-06-2000<br>24-02-2004 |
| US 5722059 | A | 24-02-1998 | US | 5722064 A | 24-02-1998 |

EPO FORM P0459

For more details about this annex : see Official Journal of the European Patent Office, No. 12/82